# EUROPÄISCHE PATENTANMELDUNG

(11) **EP 2 859 989 A1**
(43) Veröffentlichungstag der Anmeldung: **15.04.2015**
(21) Anmeldenummer: 13187759.9
(22) Anmeldetag: 08.10.2013
(51) Int. Cl.: B23P 6/00, B23P 6/04, B23K 26/00, B23K 26/34, F01D 5/00

(54) **Verfahren zur Reparatur von dünnen Wänden**

(71) Anmelder: Siemens Aktiengesellschaft, 80333 München (DE)
(72) Erfinder: Burbaum, Bernd, 14612 Falkensee (DE); Lerner, Christian, 46282 Dorsten (DE)

(57) **Zusammenfassung**

Durch die Verwendung einer Auftragsschweißung (13) auf eine dünne Wand(4) können auch diese formstabil umgeschmolzen werden.

## Beschreibung

Die Erfindung betrifft ein Verfahren zur Reparatur von dünnen Wänden, die Risse aufweisen können.

Bei Turbinenschaufeln weisen die Austrittskanten dünne Wände auf.
Ein Umschmelzprozess mittels Schweißen ist nicht anwendbar, da aufgrund der geringen Dicken die gesamte Dicke umgeschmolzen wird und damit die Form der Kante sich in gewünschter Weise verändert.

Es ist daher Aufgabe der Erfindung ein Verfahren aufzuzeigen, wie man dünne Wände besser umschmelzen kann.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Durch die Verfahrensschritte ist ein formstabiles Umschmelzen von dünnen Wänden oder Blechen möglich.

Es zeigen:
- Figuren 1: schematisch den Ablauf des Verfahrens,
- Figur 2 - 4: weitere Ausführungsbeispiele,
- Figur 5: eine Turbinenschaufel.

Die Figuren und die Beschreibung stellen nur Ausführungsbeispiele der Erfindung dar.

Die Figuren zeigen ein Bauteil 1, 120, 130 mit einer dünnen Wand 4, die insbesondere Defekte, wie einen Riss 7 und/oder einen Materialabtrag 10, aufweist.

Die Dicke der dünnen Wand 4 beträgt vorzugsweise zwischen 0,5mm - 2mm oder allgemein Wände, die mit einem Schweißverfahren vollständig aufgeschmolzen werden würden.

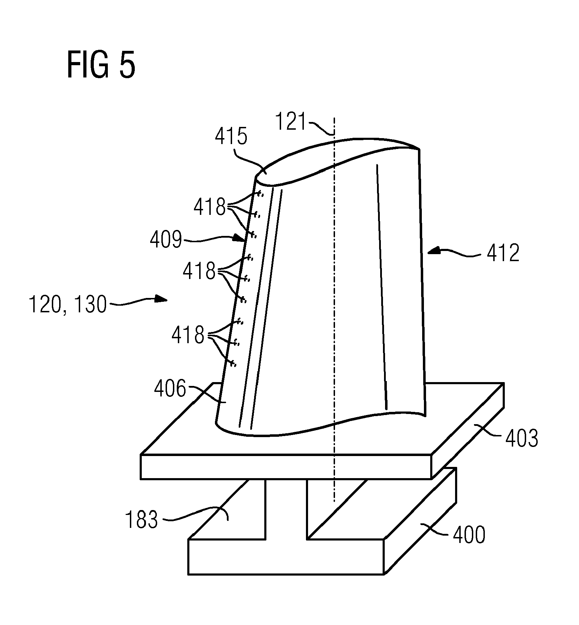

Bei Turbinenschaufeln 120, 130 (Fig. 5) sind solche dünnen Wände 4 im Bereich einer Abströmkante 412 (Fig. 5) vorhanden.

Die dünne Wand 4 und/oder die Defekte 7, 10 sollen repariert werden, jedoch ist dies durch Umschmelzen nicht möglich, da die dünne Wand 4 über die gesamte Wanddicke aufgeschmolzen werden und daher die Form verlieren würde.

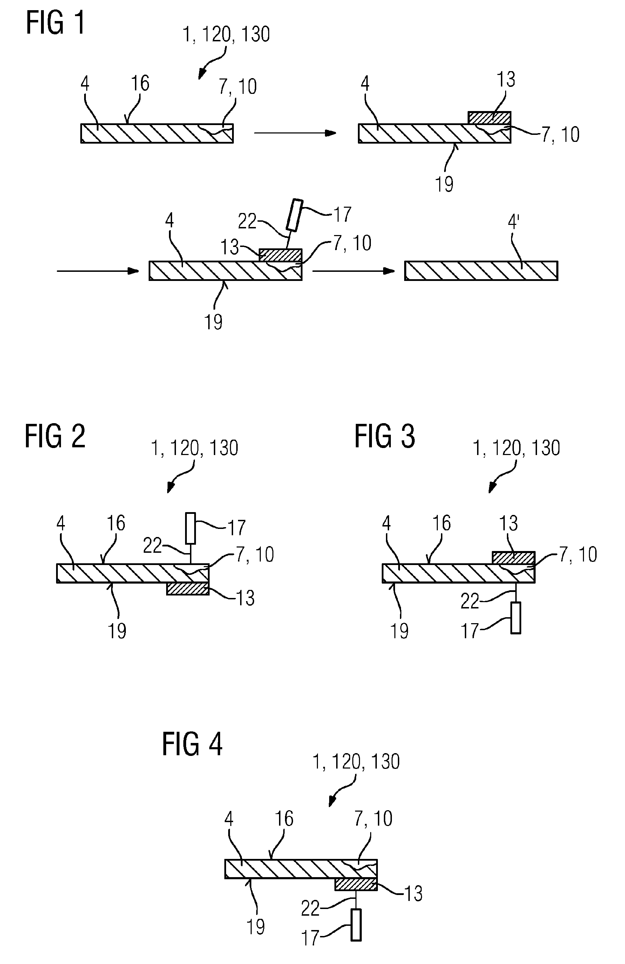

Daher wird im ersten Schritt erfindungsgemäß eine Auftragsschweißung 13 lokal auf einen Bereich erzeugt (Figur 1), zumindest dort, wo die Defekte 7, 10 vorhanden sind.
Dies kann vorzugsweise ein Auftragsschweißverfahren sein, insbesondere ein Laserauftragsschweißverfahren.

Die Auftragsschweißung 13 hat eine Dicke von vorzugsweise 2mm bis 3mm.

Als Auftragsmaterial für die Auftragsschweißung 13 wird vorzugsweise das gleiche oder ein artgleiches Material der dünnen Wand 4 verwendet.

Im nächsten Schritt findet ein Umschmelzen statt, wobei ein Schweißgerät, insbesondere ein Laser 17, sowohl die Auftragsschweißung 13, die Wand 4 und damit die darunterliegenden Bereiche mit den ggf. vorhandenen Defekten 7, 10 umschmilzt, so dass diese verschlossen werden.

Eine Überarbeitung der dünnen Wand 4 mit der umgeschmolzenen Auftragsschweißung 13 führt zu einer dünnen Wand 4' ohne Defekte.

Variationen des Verfahrens (Fig. 2, 4) sind dadurch gegeben, dass die Auftragsschweißung 13 auf einer gegenüberliegenden Seite 19 der Seite 16 der dünnen Wand 4 vorhanden ist, wobei auf der Seite 16 die Defekte 7, 10 auftreten oder dadurch, dass der energiereiche Strahl gemäß Figur 1 nicht auf die Auftragsschweißung 13 gerichtet wird, sondern auf die gegenüberliegende Seite 19 (Fig. 3).

In jeweils beiden Fällen ist es ebenso möglich den energiereichen Strahl 22 direkt auf die Auftragsschweißung 13 (Fig. 1, 4), um die Auftragsschweißung 13 mit der dünnen Wand 4 umzuschmelzen oder direkt auf die andere Seite 16, 19 der Auftragsschweißung 13 (Fig. 2, 3) zu richten und die dünne Wand 4 mit der Auftragsschweißung 13 umzuschmelzen.

Statt der Auftragsschweißung 13 kann auch Material in anderer Art und Weise auf der dünnen Wand angeordnet werden.

Eine Nachbearbeitung von umgeschmolzener Wand 4 und Auftragsschweißung 13 findet anschließend statt.

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichtemachen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAIX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren
zum Umschmelzen einer dünnen Wand (4) eines Bauteils (1, 120, 130),
bei dem in einem ersten Schritt auf einer Seite (16, 19) der dünnen Wand (4) eine Auftragsschweißung (13) erfolgt und
mittels eines Schweißgeräts (17) die Auftragsschweißung (13) und die dünne Wand (4) zumindest teilweise umgeschmolzen wird.

2. Verfahren nach Anspruch 1,
bei dem die dünne Wand (4) zumindest einen Defekt (7, 10) auf einer Seite (16) aufweist und
bei dem die Auftragsschweißung (13) auf der Seite (16) direkt und zumindest über den zumindest einen Defekt (7, 10) aufgetragen wird.

3. Verfahren nach Anspruch 1,
bei dem die dünne Wand (4) zumindest einen Defekt (7, 10) aufweist und
bei dem die Auftragsschweißung (13) auf der gegenüberliegenden Seite (19) der dünnen Wand (4) aufgetragen wird, die der Seite (16) gegenüberliegt,
auf oder in der (16) der zumindest eine Defekt (7, 10) vorhanden ist.

4. Verfahren nach einem oder mehreren der Ansprüche 1, 2 oder 3,
bei dem ein energiereicher Strahl (22) direkt auf die Auftragsschweißung (13) gerichtet wird,
um die Auftragsschweißung (13) vollständig und die dünne Wand (4) darunter zumindest teilweise umzuschmelzen.

5. Verfahren nach einem oder mehreren der Ansprüche 1, 2 oder 3,
bei dem der energiereiche Strahl (22) direkt auf die dünne Wand (4) gerichtet wird,
um die dünne Wand (4) vollständig und die Auftragsschweißung (13) zumindest teilweise umzuschmelzen.

6. Verfahren nach einem oder mehreren der Ansprüche 1, 2, 3, 4 oder 5,
bei dem die dünne Wand (4) zumindest einen Defekt (7, 10) aufweist,
so dass die Defekte (7, 10) beseitigt werden durch Verschließen des Risses (7) oder durch Materialauftrag im Bereich eines Materialabtrags (10),
und eine Überarbeitung der dünnen Wand (4).

7. Verfahren nach einem oder mehreren der Ansprüche,
bei dem als Material für die Auftragsschweißung (13) dasselbe oder ein artgleiches Material der dünnen Wand (4) verwendet wird.

8. Verfahren nach einem oder mehreren der Ansprüche,
bei dem die Auftragsschweißung (13) nur lokal auf der dünnen Wand (4) erfolgt.

9. Verfahren nach einem oder mehreren der Ansprüche,
bei dem die dünne Wand (4) eine Dicke von 0,5mm bis 2mm aufweist.

10. Verfahren nach einem oder mehreren der Ansprüche,
bei dem die Auftragsschweißung (13) eine Dicke von 2mm bis 3mm aufweist.

11. Verfahren nach einem oder mehreren der Ansprüche,
bei dem die umgeschmolzene Wand (4) mit aufgeschmolzener Auftragsschweißung (13) bearbeitet wird, insbesondere durch Materialabtragung.
